# EUROPÄISCHE PATENTSCHRIFT

(11) **EP 1 288 611 B1**
(45) Veröffentlichungstag und Bekanntmachung des Hinweises auf die Patenterteilung: **08.08.2007**
(21) Anmeldenummer: 02017349.8
(22) Anmeldetag: 02.08.2002
(51) Int. Cl.: G01B 7/30, G01D 5/245, G01D 5/347

(54) **Winkelmesssystem**
Angle measurement system
Système de mesure d'angle

(30) Priorität: 31.08.2001 US 944639
(43) Veröffentlichungstag der Anmeldung: 05.03.2003
(73) Patentinhaber: Dr. Johannes Heidenhain GmbH, 83292 Traunreut (DE)
(72) Erfinder: Setbacken, Robert, Santa Barbara, California 93109-1614 (US); Roach, Paul K., Stoneham, Massachusetts 02180 (US); Mathewson, John Murane, Santa Barbara, California 93109 (US)

(56) Entgegenhaltungen:
- US-A- 4 480 490
- US-A- 4 759 218
- US-A1- 2002 002 777

## Beschreibung

Die vorliegende Erfindung betrifft ein Winkelmesssystem mit einer Codescheibe zum Messen der Winkelposition einer Antriebswelle.

Aus der US-A-4 759 218 ist ein Tachogenerator bekannt, bei dem zwischen der die Codescheibe tragenden Nabe und der Antriebswelle eine Tellerfeder angeordnet ist. Diese Tellerfeder erzeugt eine axiale und radiale Kraft zwischen der Nabe und der Antriebswelle.

Aufgabe der vorliegenden Erfindung ist es, ein Winkelmesssystem anzugeben, das die unkomplizierte Befestigung einer Codescheibe eines Gebers an einer rotierenden Welle ermöglicht.

Gemäß der vorliegenden Erfindung ist ein Winkelmesssystem durch die Merkmale des Anspruchs 1 bzw. des Anspruchs 3 gekennzeichnet.

Die Erfindung wird nachfolgend anhand von in Zeichnungen dargestellten Ausführungsbeispielen näher erläutert.
- Figur 1: zeigt eine Ausführungsform des nach der vorliegenden Erfindung vorgesehenen Winkelmesssystems in der Querschnittsansicht;
- Figur 2: zeigt eine Ausführungsform des mit dem Winkelmesssystem von Figur 1 verwendeten Systems zum Befestigen einer Geber-Nabe in der Seitenansicht;
- Figur 3: zeigt das System zum Befestigen einer Geber-Nabe von Figur 2 in der Querschnittsansicht entlang der Linie 3-3 von Figur 2;
- Figur 4: zeigt eine zweite Ausführungsform des nach der vorliegenden Erfindung vorgesehenen Winkelmesssystems in der Querschnittsansicht;
- Figur 5: zeigt eine Ausführungsform des mit dem Winkelmesssystem von Figur 4 verwendeten Systems zum Befestigen einer Geber-Nabe in der Seitenansicht;
- Figur 6: zeigt das System zum Befestigen einer Geber-Nabe von Figur 5 in der Querschnittsansicht entlang der Linie 7-7 von Figur 5;
- Figur 7: zeigt eine dritte Ausführungsform des Systems zum Befestigen einer Geber-Nabe, das mit dem Winkelmesssystem von Figur 4 verwendet werden kann, in der Draufsicht und
- Figur 8: zeigt das System zum Befestigen einer Geber-Nabe von Figur 7 in der Querschnittsansicht entlang der Linie 9-9 von Figur 7.

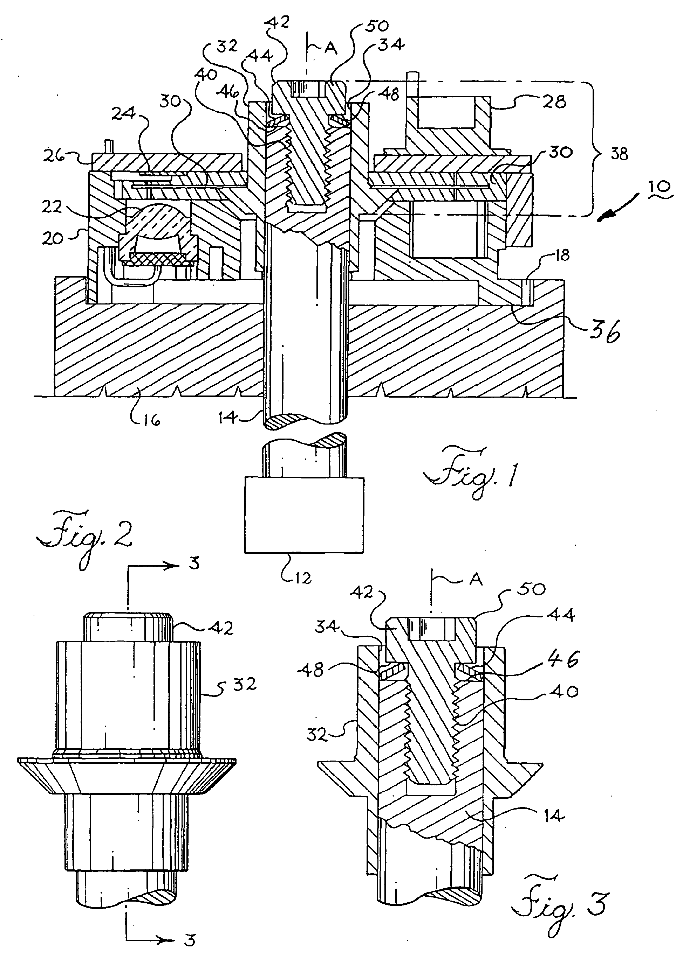

Figur 1 zeigt ein Winkelmesssystem mit einem Geber 10 und einer rotierenden Antriebswelle 14 eines Motors 12, die sich durch eine Endplatte 16 des Motors 12 erstreckt. In der Endplatte 16 kann sich eine Vertiefung 18 befinden, in der ein Gebergehäuse 20 sitzt. Eine derartige Vertiefung 18 ist für die vorliegende Erfindung nicht unbedingt erforderlich. Im Inneren des Gebergehäuses 20 befindet sich eine Lichtquelle 22. Die Lichtquelle 22 ist auf einen Lichtsensor 24 ausgerichtet, der an der Unterseite einer Platine 26 angebracht ist, welche an der Oberseite des Gebergehäuses 20 befestigt ist. Ein elektrischer Stecker 28 ist an der Platine 26 angebracht und elektrisch mit dem Lichtsensor 24 verbunden.

Wie in Figur 1 dargestellt, befinden sich der Geber 10 und die zugehörige Codescheibe 30 zwischen der Lichtquelle 22 und dem Lichtsensor 24. Die Codescheibe 30 ist fest an eine Scheibennabe 32 angebaut, welche die Verbindung mit der Antriebswelle 14 herstellt. Die Scheibennabe 32 weist eine zentrische, zylinderförmige Bohrung 34 auf.

Wie in Figur 1 dargestellt, wird ein Teil der Antriebswelle 14 in die Bohrung 34 der Scheibennabe 32 eingeschoben, wo Abmessungen und Toleranzen der Antriebswelle 14 und der Bohrung 34 bekannt sind. Ist der Geber 10 auf der Antriebswelle 14 platziert und sind sämtliche zur korrekten Positionierung des Gebers 10 bezogen auf die Antriebswelle 14 notwendigen Justagearbeiten erfolgt, wird der Geber 10 auf einer Montagefläche 36 befestigt, von der vorausgesetzt wird, dass sie senkrecht zur Drehachse der Antriebswelle 14 liegt.

Die Scheibennabe 32 wird an der Antriebswelle 14 mittels eines Systems 38 zum Befestigen der Geber-Nabe befestigt, das folgende Komponenten umfasst:
- eine Gewindebohrung 40, die in das Ende der Antriebswelle 14 gebohrt ist und entlang der Drehachse A der Antriebswelle 14 verläuft;
- eine Schraube 42 und
- eine Tellerfeder 44.

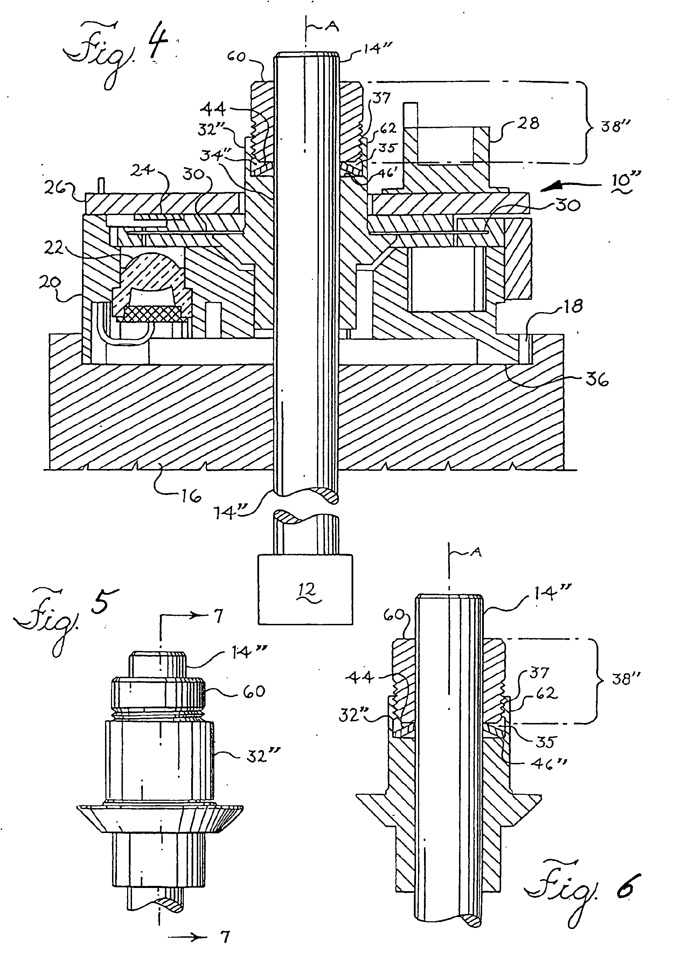

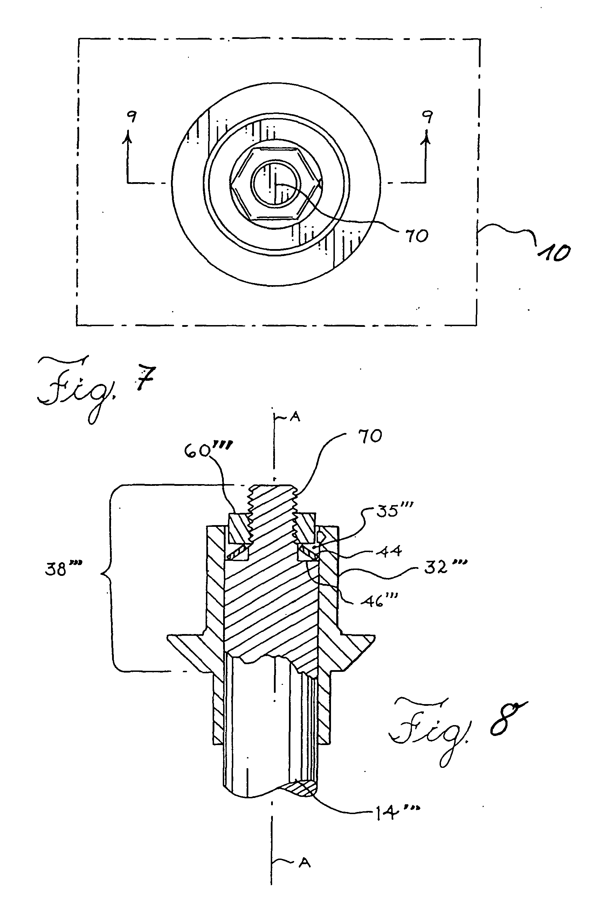

Wie in Figur 1 und 3 dargestellt, wird die Tellerfeder 44 auf einer ringförmigen Fläche 46 platziert und liegt auf der durch das Ende der Antriebswelle 14 definierten Fläche 46 (Endabschnitt) auf. Ist die Tellerfeder 44 auf der Fläche 46 positioniert, wird die Schraube 42 in die Gewindebohrung 40 der Antriebswelle 14 eingedreht.

Dabei ist zu beachten, dass der Außendurchmesser der Tellerfeder 44 etwas kleiner als der Außendurchmesser der Bohrung 34 der Scheibennabe 32 und die mittige Öffnung der Tellerfeder 44 groß genug sein muss, um die Schraube 42 aufzunehmen. Ein Teil des Außendurchmessers einer derartigen Tellerfeder 44 wird daher auf der Antriebswelle 14 aufsitzen. Wird die Schraube 42 in die Gewindebohrung 40 eingedreht und festgezogen, wird die untere Fläche 48 des Kopfes 50 der Schraube 42 auf die Tellerfeder 44 niedergedrückt und presst die Tellerfeder 44 nach unten. Durch die nach unten gerichtete Kompression der Tellerfeder 44 vergrößert sich der Außendurchmesser der Tellerfeder 44 in bezogen auf die Drehachse A radialer Richtung und stößt gegen die Wand der Bohrung 34. Die Schraube 42 wird angezogen bis der durch den Außendurchmesser der Tellerfeder 44 auf die Wand der Bohrung 34 ausgeübte, radiale Druck ausreicht, um eine Berührungslinie zwischen der Wand der Bohrung 34 und der Tellerfeder 44 herzustellen, durch welche die Scheibennabe 32 und somit der Codescheibe 30 an der Antriebswelle 14 befestigt wird. Demgemäß besteht zwischen der Antriebswelle 14 und der Scheibennabe 32 eine Verbindung durch die als Zwischenelement wirkende Tellerfeder 44. Ein Vorteil einer derartigen Verbindung besteht darin, dass die Montageposition der Nabe 32 in Bezug entlang der Wellenbohrung 34 höchst variabel ist. Für die Verbindung ist lediglich erforderlich, dass die Tellerfeder 44 bei korrekt eingestelltem Abtastabstand zwischen dem Lichtsensor 24 und der Codescheibe 30 innerhalb der Bohrung 34 der Scheibennabe 32 liegt. Außerdem muss die Verbindung zwischen der Antriebswelle 14 und der Bohrung 34 sicherstellen, dass ihre Achsen ungefähr ausgerichtet sind und Haftung zwischen der Tellerfeder 44 auf der Scheibennabe 32 und der Antriebswelle 14 besteht. Da ein ziemlich großer Bereich für den Abstand zwischen der Geberanbaufläche und dem Ende der Antriebswelle 14 zur Verfügung steht, ist die Verbindung für verschiedenste Antriebswellen möglich, die je nach Motor unterschiedliche Größen aufweisen können. Weitere Vorteile der oben beschriebenen Verbindung sind:
- leichte Entfernung der Nabe 32 mit der Codescheibe 30;
- Erzielen eines beträchtlichen mechanischen Vorteils und einer sicheren Fixierung von Nabe 32 und Welle 14, da eine große Schraube 42 verwendet werden kann;
- durch die ideale Position der Schraube 42 problemloser Zugriff auf die Schraube von der Oberseite des Gebers 10 aus und
- Erzielen einer größeren Haltekraft durch die große Berührungsfläche zwischen Tellerfeder 44 und Nabe.

Eine zweite Ausführungsform des Winkelmesssystems ist in Figur 4 bis 6 dargestellt. Der Aufbau des Gebers 10" von Figur 4 bis 6 ähnelt einer Anzahl von Komponenten des Gebers 10 von Figur 1 bis 3. Daher wurden in Figur 4 bis 6 zur Kennzeichnung gleicher Komponenten dieselben Ziffern wie in Figur 1 bis 3 verwendet. Demgemäß umfasst der in Figur 4 dargestellte Geber 10" einen Motor 12 mit rotierender Antriebswelle 14', die sich durch eine Endplatte 16 des Motors 12 erstreckt. In der Endplatte 16 kann sich eine Vertiefung 18 befinden, in der das Gebergehäuse 20 sitzt. Wieder ist die Vertiefung 18 für die vorliegende Erfindung nicht erforderlich. Innerhalb des Gebergehäuses 20 befindet sich eine Lichtquelle 22. Die Lichtquelle 22 ist auf einen Lichtsensor 24 ausgerichtet, der an der Unterseite einer Platine 26 angebracht ist, die an der Oberseite des Gebergehäuses 20 befestigt ist. Ein elektrischer Stecker 28 ist an der Platine 26 angebracht und elektrisch mit dem Lichtsensor 24 verbunden.

Wie in Figur 4 dargestellt, wird der Geber 10" und die zugehörige Codescheibe 30 zwischen der Lichtquelle 22 und dem Lichtsensor 24 platziert. Die Codescheibe 30 ist fest an die Scheibennabe 32" angebaut, welche die Verbindung zur Antriebswelle 14" herstellt. Die Scheibennabe 32" weist eine zentrische Bohrung 34" auf, deren Durchmesser stufenartig variiert. Wie in Figur 4 und 6 dargestellt, entspricht der Durchmesser des längeren, unteren Abschnitts der Bohrung 34" im Wesentlichen dem Durchmesser der Antriebswelle 14". Der Durchmesser des oberen Abschnitts der Bohrung 34" ist größer als der Durchmesser des unteren Abschnitts der Bohrung 34", so dass eine ringförmige Tasche 35 zwischen der Scheibennabe 32" und der Antriebswelle 14" entsteht, sobald die Antriebswelle 14" in die Bohrung 34" eingeschoben wird. Die ringförmige Tasche 35 ist von der Oberseite aus zugänglich und ist entlang der Innenwand 37 mit einem Gewinde versehen.

Ist der Geber 10" auf der Antriebswelle 14" platziert und sind alle zur korrekten Positionierung des Gebers 10" bezogen auf die Antriebswelle 14" erforderlichen Justagearbeiten erfolgt, wird der Geber 10" auf einer Montagefläche 36 befestigt, von der vorausgesetzt wird, dass sie senkrecht zur Drehachse der Antriebswelle 14" liegt.

Die Scheibennabe 32" wird mittels eines Systems 38" zum Befestigen einer Geber-Nabe an der Antriebswelle 14" befestigt, das folgende Komponenten umfasst:
- eine Kappe 60 mit Außengewinde;
- eine Tellerfeder 44;
- die Scheibennabe 32" mit stufenartig variierten Durchmessern zur Aufnahme der Antriebswelle 14", Tellerfeder 44 und Gegengewinde.

Es gibt zwei Unterschiede zwischen dem Befestigungssystem 38" von Figur 4 bis 6 und dem Befestigungssystem 38 von Figur 1 bis 3, die darin bestehen, dass weder das in die Antriebswelle gebohrte Loch 40 noch die Schraube 42 für das Befestigungssystem 38" erforderlich sind. Wie in Figur 4 und 6 dargestellt, wird die Tellerfeder 44 in der Tasche 35 so positioniert, dass sich der obere Abschnitt der Antriebswelle 14" durch die Öffnung der Tellerfeder 44 erstreckt. Der Durchmesser der Tasche 35 muss den Außendurchmesser der Tellerfeder 44 aufnehmen, welche in die Tasche 35 eingesetzt wird. Die Tellerfeder 44 muss dann einen etwas größeren Innendurchmesser als die Antriebswelle 14" aufweisen, welche sich durch die Öffnung der Tellerfeder 44 erstreckt.

Sobald die Tellerfeder 44 auf der ringförmigen Fläche 46" der Tasche 35 platziert ist und auf der Fläche 46" aufliegt, wird die mit Außengewinde versehene Kappe 60 in die Tasche 35 eingesetzt und gedreht, so dass das Außengewinde der Seitenwand 62 der Kappe 60 in den mit Gewinde versehenen Abschnitt der Innenwand 37 der Tasche 35 eingreift.

Wird die Schraubenkappe 60 in die Tasche 35 eingedreht und festgezogen, wird die Unterseite der Schraubenkappe 60 auf die Tellerfeder 44 niedergedrückt und presst die Tellerfeder 44 nach unten. Durch die nach unten gerichtete Kompression der Tellerfeder 44 - nach dem Aufsitzen des Außendurchmessers auf der Scheibennabe 32" - zieht sich der Innendurchmesser der Tellerfeder 44 in bezogen auf die Drehachse A radialer Richtung zusammen und stößt gegen die Antriebswelle 14". Die Kappe 60 wird angezogen bis der durch den Innendurchmesser der Tellerfeder 44 auf die Antriebswelle 14" ausgeübte, radiale Druck ausreicht, um eine Berührungslinie zwischen der Antriebswelle 14" und der Tellerfeder 44 herzustellen, durch welche die Scheibennabe 32" an der Antriebswelle 14" befestigt wird. Demgemäß besteht zwischen der Antriebswelle 14" und der Scheibennabe 32" eine Verbindung, welche durch die als Zwischenelement wirkende Tellerfeder 44 hergestellt wird.

Eine dritte Ausführungsform eines Winkelmesssystems ist in Figur 7 bis 8 dargestellt. Der Aufbau des Gebers 10'" von Figur 7 bis 8 ähnelt einer Anzahl von Komponenten des Gebers 10" von Figur 4 bis 6. Daher wurden in Figur 7 bis 8 zur Kennzeichnung gleicher Komponenten dieselben Ziffern verwendet. Insbesondere die Form der Scheibennabe 32"', der mit Gewinde versehenen Kappe 60"', der Antriebswelle 14"' und der Tellerfeder 44 in Figur 7 bis 8 wurden - im Vergleich zur Ausführungsform von Figur 4 bis 6 - abgewandelt. Die obere Wand der in Figur 8 dargestellten Scheibennabe 32'" ist **-** verglichen mit der oberen Wand der Scheibennabe 32" von Figur 4 und 6 - dicker. Außerdem besitzt die rotierende Antriebswelle 14"' einen oberen Abschnitt 70, der mit Außengewinde versehen ist und einen kleineren Durchmesser als der darunter befestigte, restliche Teil der Antriebswelle 14"' hat. Demgemäß entsteht zwischen der oberen Wand der Scheibennabe 32"' und dem oberen Abschnitt 70 eine ringförmige Tasche 35"'. Die Scheibennabe 32" wird mittels eines Systems 38" zum Befestigen einer Geber-Nabe an der Antriebswelle 14" befestigt, das folgende Komponenten umfasst:
- eine mit Innengewinde versehene Mutter 60"', deren Gewinde in den oberen Abschnitt 70 eingreift;
- eine Tellerfeder 44;
- die Scheibennabe 32'" zur Aufnahme der Antriebswelle 14"' und der Tellerfeder 44.

Wie in Figur 8 dargestellt, wird die Tellerfeder 44 in die Tasche 35'" eingesetzt, so dass sich der obere Abschnitt 70 der Antriebswelle 14'" durch die Öffnung der Tellerfeder 44 erstreckt. Sobald die Tellfeder 44 auf der ringförmigen Fläche 46" der Tasche 35" platziert ist und auf der Fläche 46" aufliegt, wird die Mutter 60'" über den oberen Abschnitt der Antriebswelle 14"' geschoben und gedreht, so dass das Innengewinde der Mutter 60"' in den mit Gewinde versehenen, äußeren Abschnitt des oberen Abschnitts 70 der Antriebswelle 14"' eingreift.

Wird die Mutter 60'" in die Tasche 35"' eingedreht und festgezogen, wird die Unterseite der Mutter 60'" auf die Tellerfeder 44 niedergedrückt und presst die Tellerfeder 44 nach unten. Durch die nach unten gerichtete Kompression der Tellerfeder 44 - nach dem Absitzen des Außendurchmessers auf der Scheibennabe 32" - zieht sich der Innendurchmesser der Tellerfeder 44 in bezogen auf die Drehachse A radialer Richtung zusammen und stößt gegen die Antriebswelle 14"'. Die Kappe 60'" wird angezogen bis der durch den Innendurchmesser der Tellerfeder 44 auf die Antriebswelle 14" ausgeübte, radiale Druck ausreicht, um eine Berührungslinie zwischen der Antriebswelle 14" und der Tellerfeder 44 herzustellen, durch welche die Scheibennabe 32"' an der Antriebswelle 14"' befestigt wird. Demgemäß besteht durch die als Zwischenelement wirkende Tellerfeder 44 eine Verbindung zwischen der Antriebswelle 14''' und der Scheibennabe 32"'.

Die oben beschriebene rotierende Antriebswelle 14''', Scheibennabe 32"' und Mutter 60"' können anstelle der entsprechenden Antriebswelle 14", Scheibennabe 32" und Schraubenkappe 60 des in Figur 5 dargestellten Gebers 10" verwendet werden.

Bei jeder der oben beschriebenen Ausführungsformen von Figur 1 bis 8 wird durch die Verwendung einer Tellerfeder 44 die Befestigung eines Gebers an einer rotierenden Antriebswelle vereinfacht.

Die oben beschriebenen Befestigungssysteme von Figur 1 bis 8 sind sowohl für Einbaugeber als auch für Geber mit Lagerung geeignet, wobei das Befestigungssystem von Figur 1 bis 3 die Anforderung erfüllen muss, dass das Ende der Antriebswelle 14 innerhalb der Scheibennabe 32 liegt, nachdem der Geber an der Montageoberfläche befestigt und die Teilscheibe bezüglich Lage und Abstand korrekt positioniert wurde.

Die hier beschriebenen Formen der Erfindung sind als bevorzugte Ausführungsformen zu verstehen, wobei Abweichungen bezüglich Form, Größe und Anordnung der Komponenten möglich sind. Beispielsweise können Komponenten mit Außengewinde, die in Komponenten mit Innengewinde eingreifen, abgeändert werden, indem Außen- und Innengewindebezeichnungen vertauscht werden.

Zusammenfassend betrifft die Erfindung gemäß den anhand der Figuren 1 bis 8 erläuterten Ausführungsbeispielen demnach ein Winkelmesssystem mit
- einer um eine Drehachse A drehbare Antriebswelle 14;
- einer Nabe 32 mit einer Codescheibe 30;
- einer Abtasteinrichtung, bestehend beispielsweise aus der Lichtquelle 22 und dem Lichtsensor 24 zur Abtastung der Codescheibe 30 und
- einer Tellerfeder 44, die auf einer Fläche 46 aufliegt und mit der durch ein axial verstellbares Betätigungselement 42, 60, 32, insbesondere einem Schraubelement, eine auf die Drehachse A bezogene radiale Druckkraft ausübbar ist, um die Nabe 32 an der Antriebswelle 14 zu befestigen.

Besonders vorteilhaft es dabei, wenn die Tellerfeder 44 auf einer Fläche 46 der Antriebswelle 14 aufliegt und das Betätigungselement eine in oder auf die Antriebswelle 14 einschraubbares Schraubelement 42, 32 ist, mit dem die Tellerfeder 44 zusammendrückbar ist, wobei die Tellerfeder 44 einen inneren und einen äußeren Umfangsbereich aufweist und einer dieser Umfangsbereiche sich radial an der Nabe 32 und der andere Umfangsbereich sich radial an der Antriebswelle 16 oder dem Schraubelement 42 klemmend abstützt.

Wenn der äußere Umfangsbereich der Tellerfeder 44 sich dabei radial an einer axial verlaufenden Durchgangsbohrung 34 der Antriebswelle 14 abstützt hat dies den besonderen Vorteil, dass die Klemmung an einer axial nicht festgelegten Stelle an der Durchgangsbohrung 34 erfolgen kann.

Alternativ liegt die Tellerfeder 44 auf einer Fläche 46 der Nabe 32 auf und das Betätigungselement ist ein in oder auf die Nabe 32 schraubbares Schraubelement 60, mit dem die Tellerfeder 44 zusammendrückbar ist, wobei die Tellerfeder 44 einen inneren und einen äußeren Umfangsbereich aufweist und einer dieser Umfangsbereiche sich radial an der Nabe 32 und der andere Umfangsbereich sich radial an der Antriebswelle 14 klemmend abstützt.

Wenn sich der innere Umfangsbereich der Tellerfeder 44 dabei radial an einer axial verlaufenden Umfangsfläche der Antriebswelle 14 abstützt hat dies den besonderen Vorteil, dass die Klemmung an einer axial nicht festgelegten Stelle an der Antriebswelle 14 erfolgen kann.

## Patentansprüche

1. Winkelmesssystem mit
- einer um eine Drehachse (A) drehbaren Antriebswelle (14);
- einer Nabe (32) mit einer Codescheibe (30);
- einer Abtasteinrichtung (22,24) zur Abtastung der Codescheibe (30) und
- einer Tellerfeder (44), die auf einer Fläche (46) der Antriebswelle (14) aufliegt und mit der durch ein axial verstellbares Betätigungselement (42, 60, 32) eine auf die Drehachse (A) bezogene radiale Druckkraft ausübbar ist, um die Nabe (32) an der Antriebswelle (14) zu befestigen, wobei
- das Betätigungselement eine in oder auf die Antriebswelle (14) einschraubbares Schraubelement (42, 32) ist, mit dem die Tellerfeder (44) zusammendrückbar ist, wobei die Tellerfeder (44) einen inneren und einen äußeren Umfangsbereich aufweist und einer dieser Umfangsbereiche sich radial an der Nabe (32) klemmend abstützt.

2. Winkelmesssystem nach Anspruch 1, wobei sich der äußere Umfangsbereich der Tellerfeder (44) radial an einer axial verlaufenden Durchgangsbohrung (34) der Nabe (32) klemmend abstützt.

3. Winkelmesssystem mit
- einer um eine Drehachse (A) drehbaren Antriebswelle (14);
- einer Nabe (32) mit einer Codescheibe (30);
- einer Abtasteinrichtung (22,24) zur Abtastung der Codescheibe (30) und
- einer Tellerfeder (44), die auf einer Fläche (46) der Nabe (32) aufliegt und mit der durch ein axial verstellbares Betätigungselement (42, 60, 32) eine auf die Drehachse (A) bezogene radiale Druckkraft ausübbar ist, um die Nabe (32) an der Antriebswelle (14) zu befestigen, wobei
- das Betätigungselement ein in oder auf die Nabe (32) einschraubbares Schraubelement (60) ist, mit dem die Tellerfeder (44) zusammendrückbar ist, wobei die Tellerfeder (44) einen inneren und einen äußeren Umfangsbereich aufweist und einer dieser Umfangsbereiche sich radial an der Antriebswelle (14) klemmend abstützt.

4. Winkelmesssystem nach Anspruch 3, wobei sich der innere Umfangsbereich der Tellerfeder (44) radial an einer axial verlaufenden Umfangsfläche der Antriebswelle (14) abstützt.

## Claims

1. Angle measurement system with
• a drive shaft (14) rotatable about a rotational axis (A);
• a hub (32) with a coded disc (30);
• a scanning means (22, 24) for scanning the coded disc (30) and
• a cup spring (44), which lies on a face (46) of the drive shaft (14) and with which a radial compression force relative to the rotational axis
(A) can be exerted by an axially adjustable actuating element (42, 60, 32), in order to fasten the hub (32) to the drive shaft (14), wherein
• the actuating element is a screw element (42, 32), which can be screwed into or onto the drive shaft (14) and with which the cup spring (44) is compressible, wherein the cup spring (44) has an inner and an outer peripheral region and one of these peripheral regions is supported radially on the hub (32) in a clamped arrangement.

2. Angle measurement system according to Claim 1, wherein the outer peripheral region of the cup spring (44) is supported radially on an axially extending through-hole (34) of the hub (32) in a clamped arrangement.

3. Angle measurement system with
• a drive shaft (14) rotatable about a rotational axis (A);
• a hub (32) with a coded disc (30);
• a scanning means (22, 24) for scanning the coded disc (30) and
• a cup spring (44), which lies on a face (46) of the hub (32) and with which a radial compression force relative to the rotational axis (A) can be exerted by an axially adjustable actuating element (42, 60, 32), in order to fasten the hub (32) to the drive shaft (14), wherein
• the actuating element is a screw element (60), which can be screwed into or onto the hub (32) and with which the cup spring (44) is compressible, wherein the cup spring (44) has an inner and an outer peripheral region and one of these peripheral regions is supported radially on the drive shaft (32) in a clamped arrangement.

4. Angle measurement system according to Claim 3, wherein the inner peripheral region of the cup spring (44) is supported radially on an axially extending peripheral face of the drive shaft (14).

## Revendications

1. Système de mesure d'angle dans lequel :
- un arbre d'entraînement (14) peut tourner autour d'un axe de rotation (A) ;
- un moyeu (32) porte un disque de code (30) ;
- un dispositif d'exploration (22, 24) sert à explorer le disque de code (30) ;
- une rondelle Belleville (44) est appliquée sur une portée (46) de l'arbre d'entraînement (14) et par cette rondelle, une force de pression radiale par rapport à l'axe de rotation (A), produite par un élément d'actionnement (42, 60, 32) réglable axialement, peut être exercée de manière à fixer le moyeu (32) sur l'arbre d'entraînement (14);
- l'élément d'actionnement est un élément fileté (42, 32) pouvant être vissé sur l'arbre d'entraînement (14) et par lequel la rondelle Belleville (44) peut être comprimée, cette rondelle présentant une zone marginale interne et une zone marginale externe, dont l'une s'appuie radialement sur le moyeu (32), en le coinçant.

2. Système de mesure d'angle selon la revendication 1, **caractérisé en ce que** la zone marginale externe de la rondelle Belleville (44) s'appuie radialement, en le coinçant, sur un alésage de passage (34) disposé axialement dans le moyeu (32).

3. Système de mesure d'angle dans lequel :
- un arbre d'entraînement (14) peut tourner autour d'un axe de rotation (A) ;
- un moyeu (32) porte un disque de code (30) ;
- un dispositif d'exploration (22, 24) sert à explorer le disque de code (30) ;
- une rondelle Belleville (44) est appliquée sur une portée (46) de l'arbre d'entraînement (14) et par cette rondelle, une force de pression radiale par rapport à l'axe de rotation (A), produite par un élément d'actionnement (42, 60, 32) réglable axialement, peut être exercée de manière à fixer le moyeu (32) sur l'arbre d'entraînement (14) ;
- l'élément d'actionnement est un élément fileté (42, 32) pouvant être vissé sur l'arbre d'entraînement (14) et par lequel la rondelle Belleville (44) peut être comprimée, cette rondelle présentant une zone marginale interne et une zone marginale externe, dont l'une s'appuie radialement sur l'arbre d'entraînement (14), en le coinçant.

4. Système de mesure d'angle selon la revendication 3, **caractérisé en ce que** la zone marginale interne de la rondelle Belleville (44) s'appuie radialement sur une surface périphérique, s'étendant axialement, de l'arbre d'entraînement (14).
